# EUROPÄISCHE PATENTSCHRIFT

(11) **EP 2 299 516 B1**
(45) Veröffentlichungstag und Bekanntmachung des Hinweises auf die Patenterteilung: **23.10.2013**
(21) Anmeldenummer: 10173472.1
(22) Anmeldetag: 19.08.2010
(51) Int. Cl.: H01M 2/10

(54) **Batteriebetriebenes Gerät und Batterie dafür**
Battery-operated device and battery for same
Appareil fonctionnant sur batterie et batterie correspondante

(30) Priorität: 24.08.2009 DE 102009028845; 12.09.2009 DE 102009041397
(43) Veröffentlichungstag der Anmeldung: 23.03.2011
(73) Patentinhaber: HUSQVARNA AB, 561 82 Huskvarna (SE)
(72) Erfinder: Kohl, Peter, 89257 Illertissen (DE); Scherer, Michael, 89231, Neu-Ulm (DE); Rudolf, Peter, 89250, Senden (DE); Locher, Ottmar, 89079, Ulm (DE)

(56) Entgegenhaltungen:
- EP-A1- 0 374 600
- DE-C1- 19 528 167

## Beschreibung

Die Erfindung betrifft ein batteriebetriebenes Gerät mit einer einen Handgriff aufweisenden und entnehmbar in das Gerät eingesetzten Batterie und eine Batterie für ein solches Gerät.

Ein derartiges Gerät ist beispielsweise aus der EP 0 854 673 B1 in Form eines Rasenmähers bekannt. Als Batterie sei im folgenden insbesondere auch eine aufladbare Batterie, auch als Akkumulator bezeichnet verstanden, welche zur Aufbewahrung oder zur vom Gerät getrennten Aufladung aus einer Batterieaufnahme des Geräts entnehmbar ist.

Bei dem bekannten Gerät ist die Batterieaufnahme durch eine gegen eine Gehäuseoberfläche des Geräts vertiefte Kammer gebildet, in welche die Batterie in vertikaler Steckrichtung von oben einsetzbar ist. An der Oberseite der Batterie ist ein schwenkbarer Handgriff angeordnet. Der Handgriff ist mit einem der Oberseite der Batterie angeordneten Verriegelungsschieber so gekoppelt, dass beim Niederschwenken des Handgriffs der Verriegelungsschieber in seitliche Vertiefungen am oberen Rand der Batterieaufnahme eingreift und die Batterie in der Batterieaufnahme formschlüssig sichert. Beim Hochschwenken des Handgriffs rückt der Verriegelungsschieber aus den seitlichen Vertiefungen aus und gibt die Batterie zur Entnahme aus der Batterieaufnahme nach oben frei. Die elektrische Kontaktierung erfolgt bei dem bekannten Gerät über federbelastete Schleifkontakte, welche gegenüber Steckkontakten nur eine sehr geringe Steckkraft beim Einsetzen bzw. Lösekraft beim Entnehmen der Batterie erfordern. Typischerweise reicht das Eigengewicht der Batterie aus, um beim Einsetzen der Batterie die elektrischen Verbindungen über die Schleifkontakte herzustellen.

Für hohe Ströme und die typischen Vibrationen und Erschütterungen im Betrieb eines Rasenmähers erweisen sich aber elektrische Verbindungen mit höherer Fügekraft, insbesondere Steckkontakte mit klemmend auf Steckstifte aufgesteckten Steckschuhe als vorteilhaft.

Der Erfindung liegt die Aufgabe zugrunde, ein batteriebetriebenes Gerät mit manuell entnehmbarer und einsetzbarer Batterie, welches auch bei elektrischen Verbindungen mit höherer Steckkraft und/oder Lösekraft vorteilhaft handhabbar ist, sowie eine Batterie dafür anzugeben.

Erfindungsgemäße Lösungen sind in den unabhängigen Ansprüchen beschrieben. Die abhängigen Ansprüche enthalten vorteilhafte Ausgestaltungen und Weiterbildungen der Erfindung.

Die zusammenwirkenden ersten und zweiten Strukturen ermöglichen vorteilhafterweise mit einer dabei erzeugten, in Steckrichtung zwischen Batterie und Batterieaufnahme wirkenden Kraftkomponente eine sichere, weitgehend wackelfreie Festlegung der Batterie in deren Betriebsstellung und/oder vorteilhafte Handhabung beim Einsetzen der Batterie in die Batterieaufnahme.

Beim Einsetzen der Batterie sieht die Erfindung vor, eine Schwenkbewegung eines den Handgriff bildenden oder enthaltenden schwenkbaren Hebels über das Ineinandergreifen räumlicher erster Strukturen auf Seiten der Batterie und zweiter Strukturen auf Seiten der Batterieaufnahme in einen Kraftbeitrag mit einer Kraftkomponente in Steckrichtung zum Aufbringen der Steckkraft umzusetzen. Die Kopplung des schwenkbaren Hebels an die Steckbewegung hat darüber hinaus den Vorteil, dass das Erreichen der zweiten Hebelstellung als zuverlässiger Indikator für die Herstellung der elektrischen Verbindungen zwischen den Kontakten der Batterie und den Gegenkontakten in der Batterieaufnahme dienen kann.

Für die Ausbildung der ineinandergreifenden ersten und zweiten Strukturen sind verschiedene Möglichkeiten gegeben. Insbesondere kann in vorteilhafter Ausführung vorgesehen sein, dass die ersten Strukturen einen bezüglich einer Schwenkachse des schwenkbaren Hebels spiralförmigen Abschnitt einer Anlagefläche aufweist, welche beim Schwenkvorgang aus der ersten in die zweite Hebelstellung an den zweiten Strukturen der Batterieaufnahme anliegt. Als spiralförmig sei dabei ein Verlauf angesehen, bei welchem die Anlagefläche bei um die Schwenkachse fortschreitenden Winkel den Abstand zur Schwenkachse kontinuierlich verändert. Alternativ oder zusätzlich kann vorteilhafterweise eine Gegenanlagefläche der zweiten Strukturen, welche beim Verschwenken des schwenkbaren Hebels von der ersten in die zweite Hebelstellung an den ersten Strukturen anliegt, gegen die Steckrichtung geneigt verläuft. Für die Ausgestaltung der Anlagefläche bzw. Gegenanlagefläche im Detail ist ein weiterer Spielraum gegeben.

Das Zusammenwirken von ersten und zweiten Strukturen beim Einsetzen der Batterie in die Batterieaufnahme ist allgemein so, dass die Batterie beim Einsetzen durch die Widerstandskraft gegen die Herstellung der elektrischen Verbindungen, zu deren Überwindung die durch das Eigengewicht der Batterie nicht erreichbare Steckkraft erforderlich ist, eine erste Zwischenstellung einnimmt. In der ersten Zwischenstellung kann die Batterie in vorteilhafter Ausführung gegen eine zu der Schwenkachse des Schwenkhebels im wesentlichen parallele erste Kippachse gegenüber der Endstellung der Batterie in der Batterieachse verkippt sein und die erste Zwischenstellung eine erste Kippstellung bilden, in welcher die Batterie gegen ihr Eigengewicht in der Aufnahme abgestützt und die elektrischen Verbindungen noch nicht oder zumindest noch nicht vollständig hergestellt sind. Ausgehend von einer solchen Zwischenstellung der Batterie in der Batterieaufnahme und der dem gelösten Zustand zugeordneten ersten Hebelstellung wird der Hebel in Richtung der zweiten Hebelstellung um ein Schwenkgelenk zwischen Hebel und Batterie, welches vorzugsweise an einer bezüglich der Steckrichtung seitlichen Fläche der Batterie angeordnet ist, geschwenkt. Bei dieser Schwenkbewegung legen sich erste und zweite Strukturen mit Anlagefläche und/oder Gegenanlagefläche aneinander. Bei Fortsetzung der Schwenkbewegung verlagert sich die Berührungsfläche von ersten und zweiten Strukturen relativ zur Batterie und/oder zur Batterieaufnahme in Steckrichtung, wobei sich die Batterie gleichzeitig in Steckrichtung bewegt. Die dabei erforderliche Kraft wird zumindest zu einem nicht vernachlässigbaren Teil durch die auf den schwenkbaren Hebel in Schwenkrichtung wirkende Handkraft aufgebracht, welche durch die ersten und zweiten Strukturen in eine auf die Batterie in Steckrichtung wirkende Kraftkomponente umgesetzt wird.

In besonders vorteilhafter Ausbildung liegen bei vollständig eingesetzter Batterie die Anlageflächen und Gegenanlageflächen in einem Bereich aneinander, welcher bezüglich einer die Schwenkachse der Schwenkbewegung enthaltenden und zur Steckrichtung parallelen Referenzebene und bezüglich der schließenden Schwenkbewegung sich vor der genannten Referenzebene befindet. Hierdurch bewirken entgegen zur Steckrichtung gerichtete Kräfte zwischen ersten und zweiten Strukturen im Betrieb des Geräts, insbesondere Rüttelkräfte z. B. bei unebenem Boden eines fahrbaren Rasenmähers Drehmomente auf den Schwenkhebel in Drehrichtung dessen durch die zweite Hebelstellung gegebener Schließstellung, so dass solche Rüttelkräfte den Schwenkhebel nicht allmählich aus dessen zweiter Hebelstellung in Richtung der ersten Hebelstellung verschwenken können.

Beim Entnehmen der Batterie aus der Batterieaufnahme zeigt sich, dass insbesondere durch die Haltekraft der elektrischen Steckverbindungen die Batterie in der Aufnahme zum Verkanten neigt, insbesondere bei Batterien mit größter Abmessung quer zur Steckrichtung. Durch die Verkippbarkeit der Batterie in der Batterieaufnahme kann beim Entnahmevorgang vorteilhafterweise eine zweite Kippstellung der Batterie in der Batterieaufnahme als eine zweite Zwischenstellung erreicht werden, in welcher die die Batterie aus der Batterieaufnahme ausziehende Benutzerkraft noch nicht die zum Lösen der elektrischen Verbindungen erforderliche Lösekraft erreicht und die Batterie in einem den Kontakten abgewandten Bereich gegenüber ihrer Endposition in der Betriebsstellung in der Aufnahme um eine zweite Kippachse nach oben verkippt ist.

Ausgehend von dieser zweiten Kippstellung, welche vorteilhafterweise durch Anschlag von Begrenzungsstrukturen der Batterie an Gegenbegrenzungsstrukturen der Batterieaufnahme bestimmt ist, können durch Aufbringen der Lösekraft die Kontakte von den Gegenkontakten gelöst und die Batterie kann vollends aus der Batterieaufnahme entnommen werden. Durch die zweite Kippstellung wird eine zweite Zwischenstellung definiert, aus welcher die Batterie ohne Verkanten in der Aufnahme entnehmbar ist.

Die Erfindung ist nachfolgend anhand bevorzugter Ausführungsbeispiele unter Bezugnahme auf die Abbildungen noch eingehend veranschaulicht. Dabei zeigt:
- Fig. 1: eine Schrägansicht einer Batterie über einer Batterieaufnahme,
- Fig. 2: einen ersten Abschnitt eines Einsetzvorgangs,
- Fig. 3: einen Verriegelungsvorgang beim Einsetzen,
- Fig. 4: die Entnahme der Batterie.

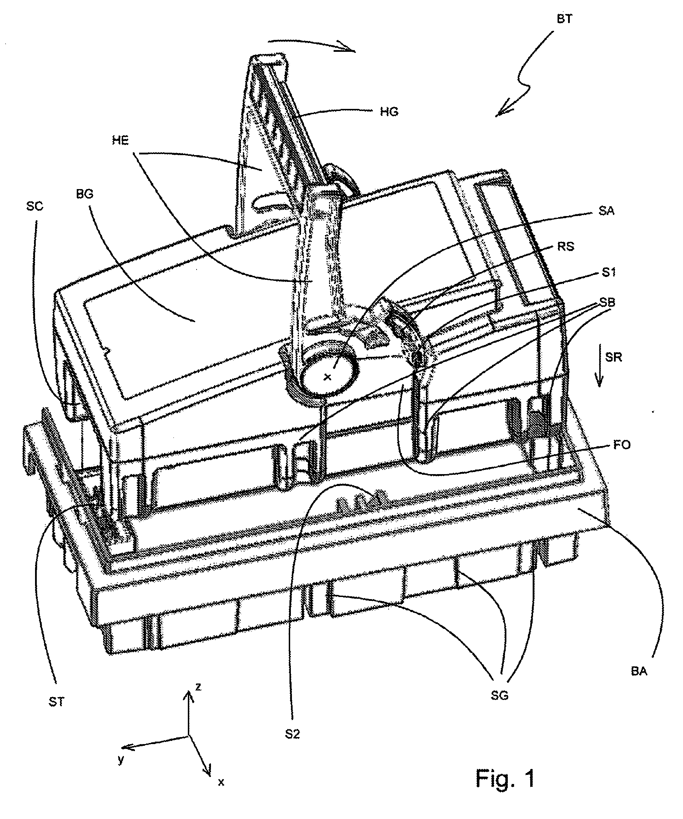

Fig. 1 zeigt in Schrägansicht eine austauschbare Batterie über einer Batterieaufnahme BA, deren Innenform auf die Außenform der Batterie abgestimmt ist. Insbesondere weist das Batteriegehäuse BG an einer bezüglich der Steckrichtung SR seitlichen Fläche eine Reliefstruktur SB auf, welche nachfolgend als Befestigungsstruktur bezeichnet sei. Die Innenseite der Batterieaufnahme BA ist mit korrespondierenden Gegenbefestigungsstrukturen SG versehen, welche in der Ansicht nach Fig. 1 nur von der Außenseite her erkennbar sind.

In der Batterieaufnahme ist ein Block mit Kontaktstiften ST angeordnet, welcher mit in der Ansicht nach Fig. 1 verborgenen Steckschuhen SC elektrische Steckverbindungen zwischen Batterie und Batterieaufnahme bzw. Batterie und dem elektrischen Antrieb des batteriebetriebenen Geräts bildet, wenn die Batterie vollständig in die Batterieaufnahme eingesetzt ist. Die Batterieaufnahme BA selbst ist in das nicht dargestellte Gehäuse eines batteriebetriebenen Geräts, beispielsweise eines batteriebetriebenen Rasenmähers eingebaut oder Bestandteil desselben.

In Fig. 1 ist ein x-y-z-Koordinatensystem mit eingezeichnet, bei welchem die z-Achse parallel zur Steckrichtung SR verläuft und die y-Richtung die Richtung der größten Ausdehnung des Batteriegehäuses BG der Batterie BT bezeichnet. Die Steckschuhe SC und die Steckstifte ST sind in y-Richtung an Endbereichen des Batteriegehäuses BG bzw. der Batterieaufnahme BA angeordnet.

An dem Batteriegehäuse ist ein Hebel HE mit einem Handgriffabschnitt HG schwenkbar angelenkt, wobei in x-Richtung gegenüber liegend jeweils ein Schwenkgelenk an den Seitenflächen des Batteriegehäuses BG vorgesehen ist. Der schwenkbare Hebel HE ist in Fig. 1 in einer ersten Hebelstellung dargestellt, in welcher der Hebel aufrecht von dem Batteriegehäuse nach oben absteht und insbesondere als Tragegriff zum Transport der Batterie benutzbar ist. Der Hebel HE ist in den beiden gegenüber liegenden Schwenkgelenken um eine zur x-Achse parallele Schwenkachse SA verschwenkbar. Die in Fig. 1 dargestellte erste Hebelstellung bildet vorteilhafterweise eine erste Endstellung der Schwenkbewegung des Hebels um die Schwenkachse SA. Der Hebel HE ist aus dieser ersten Hebelstellung in der durch einen gekrümmten Pfeil dargestellten Schwenkrichtung entgegen dem Uhrzeigersinn in der Darstellung nach Fig. 1 verschwenkbar. Drehfest mit dem Hebel HE gekoppelt ist, vorzugsweise auf beiden in x-Richtung gegenüber liegenden Seiten, ein Fortsatz FO vorgesehen, welcher vorteilhafterweise unterschiedliche Funktionen in sich vereinigen kann, wie dies anhand der folgenden Figuren noch näher beschrieben ist. Der Fortsatz FO kann insbesondere erste Strukturen S1 aufweisen, welche mit zweiten Strukturen an der Innenwand der Batterieaufnahme BA zusammen wirken.

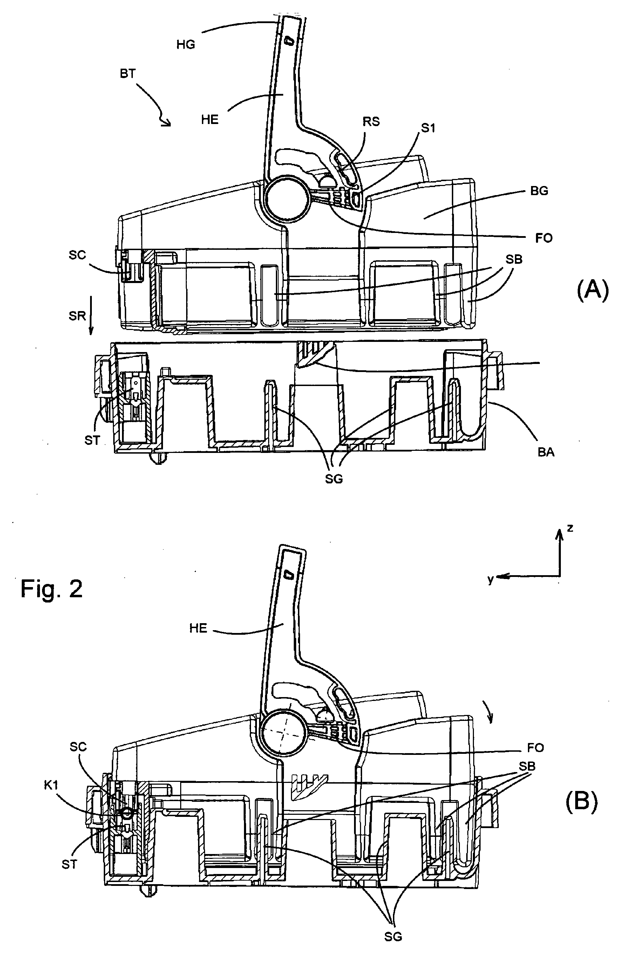

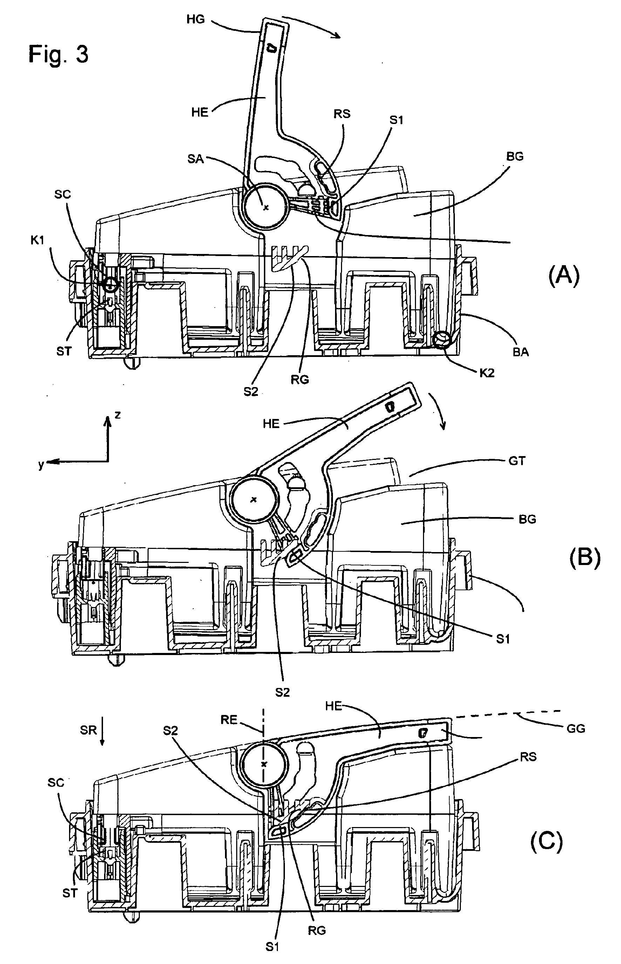

Die Batterie kann aus der in Fig. 1 dargestellten Position oberhalb der Batterieaufnahme in zur z-Richtung paralleler Steckrichtung SR in die Batterieaufnahme BA eingesetzt werden, was anhand der Fig. 2 und Fig. 3. noch im Detail dargestellt ist.

Fig. 2 (A) zeigt nochmals die in Fig. 1 in Schrägansicht dargestellte Situation, in welcher sich die Batterie BT oberhalb der Batterieaufnahme BA befindet. Fig. 2 zeigt die Batterie BT und die Batterieaufnahme BA in teilweise geschnittener Ansicht mit Blickrichtung in x-Richtung. Insbesondere dargestellt sind bei der Batterie BT die Steckschuhe SC an einem Längsendenbereich, mehrere Teilstrukturen der Begrenzungsstruktkuren SB, erste Strukturen S1 an dem Fortsatz FO des Hebels HE sowie zusätzlich Raststrukturen RS an dem Fortsatz FO und bei der Batterieaufnahme BA die Steckstifte ST, zweite Strukturen S2 an Seitenwänden der Batterieaufnahme und mehrere Teilstrukturen der Gegenbegrenzungsstrukturen SG.

Die Batterie wird aus der in Fig. 2 dargestellten Position unter ihrem Eigengewicht in Steckrichtung SR in die Batterieaufnahme BA abgesenkt, wobei die Begrenzungsstrukturen SB und die Gegenbegrenzungsstrukturen SG ineinander greifen und eine Positionierung der Batterie in der Batterieaufnahme mit bewirken. Über die Begrenzungsstrukturen und Gegenbegrenzungsstrukturen kann auch eine vertikale Abstützung der Batterie in der Batterieaufnahme erfolgen.

Beim Absenken der Batterie aus der in Fig. 2 (A) gezeigten gelösten Stellung in die Batterieaufnahme unter der Einwirkung des Eigengewichts der Batterie kommen gemäß der in Fig. 2 (B) gezeigten Situation die Kontaktschuhe SC und die Kontaktstifte ST miteinander in Berührung, ohne dass aber die Steckkraft, welche zum Aufstecken der Steckschuhe SC auf die Steckstifte ST erforderlich ist, durch das Gewicht der Batterie aufgebracht werden kann. In dieser in Fig. 2(B) dargestellten Position bilden die Anlagebereiche der Steckschuhe SC an den Steckstiften ST eine erste im wesentlichen in x-Richtung verlaufende Kippachse, um welche die Batterie, unverändert unter der Einwirkung ihres Eigengewichts, verkippbar ist. Hierfür sind die Begrenzungsstrukturen SB und Gegenbegrenzungsstrukturen SG so aufeinander abgestimmt, dass ausgehend von der in Fig. 2 (B) dargestellten Situation eine Verkippung der Batterie um die erste Kippachse K1 im Uhrzeigersinn möglich ist.

Durch eine solche Verkippung nimmt die Batterie in der Batterieaufnahme eine erste Kippstellung ein, welche in Fig. 3 (A) dargestellt ist. In dieser ersten Kippstellung ist die Batterie zum einen im Bereich der ersten Kippachse an Steckschuhen SC und Steckstiften ST und zum anderen an einem den Kontakten in y-Richtung abgewandten Bereich durch Aufstehen des Batteriegehäuses an der Batterieaufnahme abgestützt. Die den Kontakten abgewandte Abstützung liegt in y-Richtung vorteilhafterweise auf der den Kontakten abgewandten Seite der y-Position der Schwenkachse SA, vorzugsweise ist die Abstützung in einem Endbereich des Batteriegehäuses in y-Richtung gegeben. Ein solcher Abstützungsbereich bildet bei der weiteren Einsetzbewegung der Batterie eine zweite Kippachse und ist in Fig. 3 (A) mit K2 bezeichnet. In der in Fig. 3 (A) dargestellten Position ist die Gewichtskraft der Batterie durch die Abstützung der Batterie an den Kippachsen K1 und K2 aufgefangen und die am Handgriff HG angreifende Benutzerhand vom Gewicht der Batterie entlastet. Das Eigengewicht der Batterie reicht nicht aus, um die Steckkraft für ein Aufstecken der Steckschuhe ST auf die Steckstifte ST zu bewirken.

Der Benutzer kann nun den Hebel HE um die Schwenkachse SA im Uhrzeigersinn verschwenken, wie in Fig. 3 (B) dargestellt. Dabei kommen die ersten Strukturen S1 an dem Fortsatz FO des schwenkbaren Hebels einerseits und die zweiten Strukturen S2, welche als Vorsprünge in x-Richtung von der Seitenwand der Batterieaufnahme ausgebildet sind, in Anlage zueinander. Die ersten und zweiten Strukturen sind so aufeinander abgestimmt, dass eine weitere Verschwenkung des Hebels im Uhrzeigersinn aus der in Fig. 3. (B) dargestellten Stellung mit einer Verschiebung der Schwenkachse SA in Steckrichtung SR zwangsgekoppelt ist. Im skizzierten Ausführungsbeispiel verlaufen hierfür die zweiten Strukturen S2 so gegen die Vertikale geneigt, dass beim Gleiten der ersten Strukturen S1 bei weiterer Verschwenkung des Hebels um die Schwenkachse die Schwenkachse mit dieser die gesamte Batterie nach unten in die Aufnahme gezogen werden. An den ersten Strukturen S1 ist in Schwenkrichtung weisend eine gegen eine Tangente bezüglich der Schwenkachse SA geneigte Anstiegsflanke und gegen der Schwenkung auf diese folgend eine Anlagefläche in zur Schwenkachse SA annähernd konstantem Radius vorgesehen.

Die Form der Form von Anlageflächen und Gegenanlageflächen der ersten Strukturen und der zweiten Strukturen ist offensichtlich einer weiten Variation zugänglich, um den Effekt zu erzielen, dass eine Verschwenkung des Hebels um die Schwenkachse SA zwangsweise mit einer Verschiebung der Schwenkachse SA nach unten in Richtung der Batterieaufnahme gekoppelt ist. Da die Batterie bei der Kippachse K2 stabil abgestützt ist, bewirkt die durch die Hebelverschwenkung ausgeübte und über die Anlage der ersten und zweiten Strukturen in eine vertikale Kraftkomponente umgesetzte Handkraft des Benutzers, dass die Steckschuhe SC auf die Steckstifte ST aufgeschoben werden. Die Kraft setzt sich dabei zusammen aus einem durch das Eigengewicht der Batterie bedingten Kraftanteil und einem durch die bei der Schwenkbewegung von der Benutzerhand ausgeübte Kraft bewirkten weiteren Kraftanteil.

In der in Fig. 3 skizzierten Endposition der Batterie als deren Betriebsposition befindet sich der Hebel in einer zweiten Hebelstellung, in welcher er vorteilhafterweise in eine Stufe GT am Batteriegehäuse abgesenkt ist. Vorteilhafterweise ergibt sich in der in Fig. 3 gezeigten zweiten Stellung des Hebels eine weitgehend stufenfreie Oberflächen-Einhüllende zwischen der Batterie und einer angrenzenden Oberfläche des Gerätegehäuses, welche mit unterbrochener Linie GG angedeutet ist. Der Hebel ist in der in Fig. 3 dargestellten zweiten Hebelstellung vorteilhafterweise durch gesonderte Raststrukturen gehalten, welche ein versehentliches Hochschwenken des Hebels in dem typischerweise von starken Vibrationen und Erschütterungen begleiteten Betrieb des Geräts verhindert. Hierfür sind vorteilhafterweise an dem Fortsatz FO des Hebels Raststrukturen RS ausgebildet, welche mit Gegenraststrukturen RG an den zweiten Strukturen zusammenwirken und die Beibehaltung der zweiten Hebelstellung in Fig. 3 gegen unbeabsichtigtes Hochschwenken sichern. Die Raststrukturen RS können beispielsweise durch einen federnden Kunststoffbügel mit einem radial vorspringenden Abschnitt gebildet sein.

Der erste Kippwinkel zwischen der ersten Kippstellung nach Fig. 3 (A) und der Betriebsstellung nach Fig. 3 (C) beträgt vorteilhafterweise wenigstens 1°, insbesondere wenigstens 1,5°. Der erste Kippwinkel beträgt vorteilhafterweise höchstens 10°, insbesondere höchstens 5°.

In der in Fig. 3 (C) dargestellten Betriebsposition bewirken vorteilhafterweise die ineinandergreifenden ersten und zweiten Strukturen eine elastische Verspannung der Batterie gegen die Batterieaufnahme in Steckrichtung. Hierfür kann vorteilhafterweise eine elastische Verformbarkeit des Fortsatzes FO und/oder eine andere elastische Verbindung der ersten Strukturen mit der Batterie und/oder der zweiten Strukturen mit der Batterieaufnahme vorgesehen sein.

Von besonderem Vorteil ist, dass die Anlageflächen der ersten Strukturen S1 und die Gegenanlageflächen der zweiten Strukturen S2 in einem Bereich aneinander liegen, welcher bezüglich einer mit RE bezeichneten Referenzebene, welche durch die Schwenkachse SA des schwenkbaren Hebels HE und parallel zur Steckrichtung SR verläuft, in schließender Schwenkrichtung des schwenkbaren Hebels vor dieser Referenzebene liegen, in der Darstellung nach Fig. 3(C) also rechts von der Referenzebene RE. Zwischen ersten und zweiten Strukturen über deren Anlageflächen und Gegenanlageflächen im Betrieb z. B. durch vertikale Rüttelbewegungen eines fahrenden Rasenmähers entgegen der Steckrichtung wirkende Kräfte sind dann auf die Batterie bezogen an den ersten Strukturen nach unten gerichtet und bewirken ein Drehmoment auf den Hebel HE um die Schwenkachse, welches auf den Hebel HE in schließender Schwenkrichtung, in der Darstellung nach Fig. 3 (C) also im Uhrzeigersinn wirkt. Hierdurch wird zuverlässig verhindert, dass sich der schwenkbare Hebel aus seiner in Fig. 3 (C) gezeigten zweiten Hebelstellung durch Rüttelkräfte oder sonstige entgegen der Steckrichtung wirkende Kräfte unbeabsichtigt in Richtung der ersten Hebelstellung verlagert. Die Anlageflächen der ersten Strukturen und die Gegenanlageflächen der zweiten Strukturen liegen in der zweiten Hebelstellung nach Fig. 3 (C) vorteilhafterweise an bezüglich der Schwenkachse im wesentlichen tangentialen Flächenbereichen aneinander an.

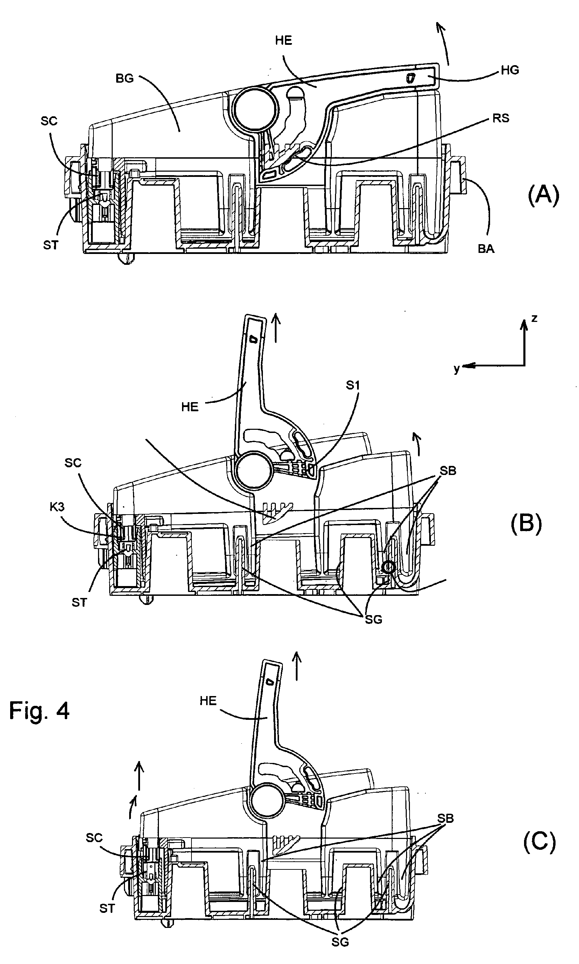

Fig. 4 zeigt in mehreren Schritten eine für die Entnahme der Batterie aus der Batterieaufnahme vorteilhafte Ausgestaltung insbesondere der Begrenzungsstrukturen und Gegenstrukturen.

Ausgehend von der Betriebsstellung der Batterie in der Batterieaufnahme, wie sie in Fig. 4 (A) entsprechend Fig. 3 (C) dargestellt ist, wird der Handhebel aus seiner Verrastung nach oben geschwenkt und die Batterie vom Benutzer unter Überwindung der Gewichtskraft der Batterie nach oben abgehoben. Da die Steckverbindungen zwischen den Steckschuhen SC und den Steckstiften ST eine Haltekraft besitzen, wird anfänglich die Batterie durch die nach oben gerichtete, am Handgriff des Hebels angreifende Benutzerkraft angehoben und dabei aber an den Steckverbindungen festgehalten. Die Begrenzungsstrukturen SB und Gegenbegrenzungsstrukturen SG sind so aufeinander abgestimmt, dass dabei eine Verkippung des Batteriegehäuses unter Anhebung des den Steckkontakten abgewandten Endes der Batterie um ein begrenztes Maß möglich ist, wobei eine dabei wirksame Kippachse im Bereich der Steckverbindungen mit K3 bezeichnet ist. Die Begrenzungsstrukturen und Gegenbegrenzungsstrukturen sind so aufeinander abgestimmt, dass sie zum einen bei der Entnahme eine anfängliche Verkippung der Batterie im Gegenuhrzeigersinn um die Kippachse K3 in die in Fig. 4 (B) skizzierte Kippstellung als eine Zwischenstellung um einen zweiten Kippwinkel oder wenigstens 0,75° zulassen, zugleich aber die Verkippung auf einen kleinen Kippwinkel von vorteilhafterweise höchstens 5°, insbesondere höchstens 2,5°, typischerweise ca. 1 ° begrenzen. In dieser begrenzten Kippstellung liegen die Begrenzungsstrukturen SB und Gegenbegrenzungsstrukturen SG an einer vorteilhafterweise den Kontakten in y-Richtung über die y-Position der Schwenkachse SA hinaus abgewandten Position aneinander an und verhindern eine weitere Verkippung. Bei Erhöhung der ausziehenden Kraft durch den Benutzer bildet diese Anlage der Begrenzungsstrukturen an den Gegenbegrenzungsstrukturen eine vierte Kippachse, welche in Fig. 4 (B) mit K4 bezeichnet ist. Bei Erhöhung der ausziehenden Kraft und Aufbringen der Lösekraft werden die Steckschuhe SC unter Rückverkippung der Batterie um die vierte Kippachse K4 von den Steckstiften gelöst, wie in Fig. 4 (C) dargestellt, und die Batterie kann nach oben aus der Batterieaufnahme entnommen werden.

Der Hebel kann vorteilhafterweise aus zwei spiegelbildlich zueinander geformten Spritzgußteilen und einem Handgriffabschnitt zusammengesetzt sein. Die Batterieaufnahme kann gleichfalls vorteilhafterweise als KunststoffSpritzgußteil ausgeführt sein.

## Patentansprüche

1. Batteriebetriebenes Gerät mit einer Batterieaufnahme (BA) und mit einer relativ zu dieser parallel zu einer Steckrichtung (SR) zwischen einer Betriebsposition und einer gelösten Position verlagerbaren Batterie (BT), wobei bei der Verlagerung selbsttätig elektrische Verbindungen zwischen Kontakten (SC) der Batterie (BT) und Gegenkontakten (ST) der Batterieaufnahme (BA) unter Aufbringen einer Steckkraft hergestellt bzw. unter Aufbringen einer Abziehkraft gelöst werden und wobei an einer in Steckrichtung (SR) der Batterieaufnahme (BA) abgewandten Seite der Batterie (BT) ein Handgriff (HG) ausgebildet ist, wobei ferner
- an der Batterie (BT) erste Strukturen (S1) und an der Batterieaufnahme (BA) zweite Strukturen (S2) ausgebildet sind,
- der Handgriff (HG) als ein um eine Schwenkachse (SA) an der Batterie (BT) schwenkbare Hebel (HE) mit einer der gelösten Position der Batterie (BT) zugeordneten ersten Hebelstellung, und einer der Betriebsposition der in die Batterieaufnahme (BA) eingesetzten Batterie (BT) zugeordneten zweiten Hebelstellung ausgebildet ist,
**dadurch gekennzeichnet, dass** bei der Verschwenkung des Hebels (HE) von der ersten in die zweite Hebelstellung vor Erreichen der Betriebsstellung der Batterie die ersten Strukturen (S1) und die zweiten Strukturen (S2) in Anlage zueinander kommen und so aufeinander abgestimmt sind, dass eine weitere Verschwenkung des Hebels in Richtung der zweiten Hebelstellung eine in Steckrichtung (SR) gerichtete Kraftkomponente zwischen Batterie und Batterieaufnahme bewirkt und zwangsweise mit einer Verschiebung der Schwenkachse (SA) in Richtung der Batterieaufnahme (BA) gekoppelt ist.

2. Gerät nach Anspruch 1, **dadurch gekennzeichnet, dass** die in Steckrichtung gerichtete Kraftkomponente während der Verschwenkung des Hebels (HE) aus der ersten in die zweite Hebelstellung einen Kraftbeitrag zu der für die Herstellung der Steckverbindungen (ST, SC) erforderlichen Steckkraft liefert.

3. Gerät nach Anspruch 1 oder 2, **dadurch gekennzeichnet, dass** die vertikale Kraftkomponente in der zweiten Hebelstellung eine elastische Verspannung der Batterie (BT) gegen die Batterieaufnahme (BA) in Steckrichtung (SR) bewirkt.

4. Gerät nach einem der Ansprüche 1 bis 3, **dadurch gekennzeichnet, dass** der schwenkbare Hebel (HE) bezüglich der Steckrichtung (SR) seitlich an der Batterie (BT) angeordnet ist.

5. Gerät nach einem der Ansprüche 1 bis 4, **dadurch gekennzeichnet, dass** zweite Strukturen (S2) an der Seitenwand der Batterieaufnahme (BA) angeordnet sind.

6. Gerät nach einem der Ansprüche 1 bis 5, **dadurch gekennzeichnet, dass** die ersten Strukturen (S1) an einem Fortsatz des schwenkbaren Hebels (HE) über dessen Schwenkgelenk hinaus ausgebildet sind.

7. Gerät nach einem der Ansprüche 1 bis 6, **dadurch gekennzeichnet, dass** erste Strukturen (S1) einen als bezüglich einer Schwenkachse (SA) des schwenkbaren Hebels annähernd spiralförmigen Abschnitt umfassen.

8. Gerät nach einem der Ansprüche 1 bis 7, **dadurch gekennzeichnet, dass** die zweiten Strukturen (S2) eine gegen die Steckrichtung (SR) geneigt verlaufende Gegenanlagefläche (RG) für die ersten Strukturen (S1) umfassen.

9. Gerät nach einem der Ansprüche 1 bis 8, **dadurch gekennzeichnet, dass** der schwenkbare Hebel (HE) in der zweiten Hebelstellung arretierbar ist.

10. Gerät nach Anspruch 9, **dadurch gekennzeichnet, dass** federnde Rastmittel (RS) für die Arretierung vorgesehen sind.

11. Gerät nach einem der Ansprüche 1 bis 10, **dadurch gekennzeichnet, dass** beim Einsetzen des Geräts eine erste Kippachse (K1) bei den Kontakten (SC) und Gegenkontakten (ST) vor Herstellen der Steckverbindung gegeben ist und die Batterie (BT) nach Verkippen über diese erste Kippachse eine erste Kippstellung einnimmt.

12. Gerät nach Anspruch 11, **dadurch gekennzeichnet, dass** die Batterie (BT) in der ersten Kippstellung sich an einer den Kontakten (SC) quer zur Steckrichtung (SR) angewandten ersten Stützposition in Steckrichtung in der Batterieaufnahme (BA) abstützt.

13. Batterie (BT) mit einem um eine Schwenkachse (SA) schwenkbaren Hebel (HE) und mit an dessen Schwenkbewegung gekoppelten Verriegelungsmitteln (S1, S2) für ein Gerät nach einem der Ansprüche 1 bis 12, **dadurch gekennzeichnet, dass** der schwenkbare Hebel (HE) an gegenüber liegenden Seitenwänden des Batteriegehäuses der Batterie (BT) in je einem Schwenkgelenk angelenkt ist, und dass am drehfest mit dem Hebel gekoppelten Fortsätzen von der Schwenkachse (SA) beabstandet die Verriegelungsmittel (S1, S2) angeordnet und mit dem Hebel (HE) um die Schwenkachse (SA) schwenkbar sind.

## Claims

1. Battery-operated device having a battery receptacle (BA) and a battery (BT) displaceable relative to said battery receptacle, parallel to a plug-in direction (SR), between an operational position and a released position, wherein, during the displacement, electrical connections between contacts (SC) of the battery (BT) and counter-contacts (ST) of the battery receptacle (BA) are automatically created upon application of a plug-in force and broken upon application of a withdrawal force, and wherein a handgrip (HG) is formed on a side of the battery (BT) facing away in a plug-in direction (SR) of the battery receptacle (BA), wherein furthermore
- first structures (S1) are formed on the battery (BT) and second structures (S2) are formed on the battery receptacle (BA),
- the handgrip (HG) is in the form of a lever (HE) swivellable about a swivel axis (SA) on the battery (BT), having a first lever position associated with the released position of the battery (BT) and a second lever position associated with the operational position of the battery (BT) inserted into the battery receptacle (BA),
**characterised in that**, during swivelling of the lever (HE) from the first into the second lever position before the operational position of the battery is reached, the first structures (S1) and the second structures (S2) come into contact with one another and are matched to one another in such a way that further swivelling of the lever in the direction of the second lever position brings about a force component between the battery and the battery receptacle directed in the plug-in direction (SR) and is forcibly coupled to a displacement of the swivel axis (SA) in the direction of the battery receptacle (BA).

2. Device according to claim 1, **characterised in that**, during swivelling of the lever (HE) from the first into the second lever position, the force component directed in the plug-in direction provides a force contribution to the plug-in force required for producing the plug-in connections (ST, SC).

3. Device according to claim 1 or 2, **characterised in that** the vertical force component in the second lever position brings about elastic tensioning of the battery (BT) against the battery receptacle (BA) in the plug-in direction (SR).

4. Device according to any one of claims 1 to 3, **characterised in that** the swivellable lever (HE) is arranged on the battery (BT) laterally with respect to the plug-in direction (SR).

5. Device according to any one of claims 1 to 4, **characterised in that** second structures (S2) are arranged on the side wall of the battery receptacle (BA).

6. Device according to any one of claims 1 to 5, **characterised in that** the first structures (S1) are formed on a projection of the swivellable lever (HE) projecting beyond its swivel joint.

7. Device according to any one of claims 1 to 6, **characterised in that** first structures (S1) comprise a portion which is approximately spiral-shaped with respect to a swivel axis (SA) of the swivellable lever.

8. Device according to any one of claims 1 to 7, **characterised in that** the second structures (S2) comprise a counter-contact surface (RG) for the first structures (S1), which extends at an inclination to the plug-in direction (SR).

9. Device according to any one of claims 1 to 8, **characterised in that** the swivellable lever (HE) is blockable in the second lever position.

10. Device according to claim 9, **characterised in that** resilient latching means (RS) are provided for the blocking.

11. Device according to any one of claims 1 to 10, **characterised in that**, when the device is used, the contacts (SC) and counter-contacts (ST) have a first tilting axis (K1) before making the plug-in connection, and **in that**, after tilting about this first tilting axis, the battery (BT) adopts a first tilted position.

12. Device according to claim 11, **characterised in that**, in the first tilted position, the battery (BT) is supported in a first support position, facing towards the contacts (SC) transverse to the plug-in direction (SR), in the plug-in direction of the battery receptacle (BA).

13. Battery (BT), having a lever (HE) swivellable about a swivel axis (SA) and having locking means (S1, S2) which are coupled to the swivelling movement of said lever (HE), for a device according to any one of claims 1 to 12, **characterised in that** the swivellable lever (HE) is coupled, in each case in a swivel joint, to opposing side walls of the battery housing of the battery (BT), and **in that** the locking means (S1, S2) are arranged at a distance from the swivel axis (SA), on projections non-rotatably coupled to the lever, and are swivellable about the swivel axis (SA) together with the lever (HE).

## Revendications

1. Appareil fonctionnant sur batterie, doté d'un compartiment de batterie (BA) et d'une batterie (BT) déplaçable, par rapport à celui-ci, parallèlement à un sens de connexion (SR) entre une position de fonctionnement et une position de déconnexion, des connexions électriques étant, au moment du déplacement, automatiquement soit créées entre des contacts (SC) de la batterie (BT) et des contre-contacts (ST) du compartiment de batterie (BA) par application d'une force d'insertion, soit interrompues par application d'une force d'extraction, et une poignée (HG) étant formée sur une face de la batterie (BT) opposée au compartiment de batterie (BA), dans le sens de connexion (SR), de plus
- des premières structures (S1) étant disposées sur la batterie (BT) et des deuxièmes structures (S2) sur le compartiment de batterie (BA),
- la poignée (HG) étant conçue comme une manette (HE) pivotable sur la batterie (BT) autour d'un axe de pivotement (SA), avec une première position de manette attribuée à la position de déconnexion de la batterie (BT) et une deuxième position de manette attribuée à la position de fonctionnement de la batterie (BT) placée dans le compartiment de batterie (BA),
**caractérisé en ce que**, lors du pivotement de la manette (HE) de la première à la deuxième position de manette, avant que ne soit atteinte la position de fonctionnement de la batterie, les premières structures (S1) et les deuxièmes structures (S2) se rapprochent en contact l'une de l'autre et sont adaptées l'une à l'autre de telle sorte que le fait d'accentuer le pivotement de la manette en direction de la deuxième position de manette produit une composante de force dirigée dans le sens de connexion (SR) entre la batterie et le compartiment de batterie, et s'accompagne forcément d'un déplacement de l'axe de pivotement (SA) en direction du compartiment de batterie (BA).

2. Appareil selon la revendication 1, **caractérisé en ce que** la composante de force dirigée dans le sens de connexion participe, pendant le pivotement de la manette (HE) de la première dans la deuxième position de manette, à la force d'insertion nécessaire pour la création des connexions par fiche (ST, SC).

3. Appareil selon la revendication 1 ou 2, **caractérisé en ce que** la composante de force verticale en deuxième position de manette entraîne une contrainte élastique de la batterie (BT) contre le compartiment de batterie (BA) dans le sens de connexion (SR).

4. Appareil selon l'une quelconque des revendications 1 à 3, **caractérisé en ce que** la manette (HE) pivotable est agencée, en ce qui concerne le sens de connexion (SR), latéralement sur la batterie (BT).

5. Appareil selon l'une quelconque des revendications 1 à 4, **caractérisé en ce que** des deuxièmes structures (S2) sont agencées sur la paroi latérale du compartiment de batterie (BA).

6. Appareil selon l'une quelconque des revendications 1 à 5, **caractérisé en ce que** les premières structures (S1) sont agencées sur un prolongement de la manette (HE) pivotable au-delà de son articulation de pivotement.

7. Appareil selon l'une quelconque des revendications 1 à 6, **caractérisé en ce que** des premières structures (S1) comprennent une section quasiment en forme de spirale par rapport à l'axe de pivotement (SA) de la manette pivotable.

8. Appareil selon l'une quelconque des revendications 1 à 7, **caractérisé en ce que** les deuxièmes structures (S2) comprennent une surface de contre-contact (RG) pour les premières structures (S1), inclinée dans le sens opposé au sens de connexion (SR).

9. Appareil selon l'une quelconque des revendications 1 à 8, **caractérisé en ce que** la manette (HE) pivotable peut être bloquée à la deuxième position de manette.

10. Appareil selon la revendication 9, **caractérisé en ce que** des moyens de retenue (RS) à ressort sont prévus pour le blocage.

11. Appareil selon l'une quelconque des revendications 1 à 10, **caractérisé en ce qu'**existe, lors de l'utilisation de l'appareil, un premier axe de basculement (K1) pour les contacts (SC) et les contre-contacts (ST) avant que ne soit créée la connexion par fiche, et **en ce que** la batterie (BT) prend une première position de basculement après basculement sur ledit premier axe de basculement.

12. Appareil selon la revendication 11, **caractérisé en ce que** la batterie (BT) s'appuie en première position de basculement sur une première position d'appui appliquée aux contacts (SC) perpendiculairement au sens de connexion (SR), dans le sens de connexion dans le compartiment de batterie (BA).

13. Batterie (BT), dotée d'une manette (HE) pivotable autour d'un axe de pivotement (SA) et de moyens de verrouillage (S1, S2) couplés à son mouvement de pivotement pour un appareil selon l'une quelconque des revendications 1 à 12, **caractérisée en ce que** la manette (HE) pivotable est articulée par une articulation respective sur les parois latérales opposées du boîtier de batterie de ladite batterie (BT) et **en ce que** sont disposés les moyens de verrouillage (S1, S2) sur les prolongements couplés de manière anti-rotative à la manette, à distance de l'articulation de pivotement (SA) et qu'ils sont pivotables autour de l'axe de pivotement (SA) au moyen de la manette (HE).
